# EUROPÄISCHE PATENTANMELDUNG

(11) **EP 1 157 911 A1**
(43) Veröffentlichungstag der Anmeldung: **28.11.2001**
(21) Anmeldenummer: 01112270.2
(22) Anmeldetag: 18.05.2001
(51) Int. Cl.: B60T 8/88, B60T 8/34, B60T 11/32, B60T 8/50, B60T 17/22

(54) **Fahrzeugbremsanlage mit zwei Bremskreisen**

(30) Priorität: 19.05.2000 DE 10024848
(71) Anmelder: LUCAS AUTOMOTIVE GMBH, 56070 KOBLENZ (DE)
(72) Erfinder: Schmidt, Frank, 56332 Brodenbach (DE); Keen, Steven, 56068 Koblenz (DE); Montermann, Ingo, 56626 Andernach (DE); Puderbach, Christoph, 56584 Anhausen (DE)
(74) Vertreter: Schmidt, Steffen J., Dipl.-Ing.

(57) **Zusammenfassung**

Die Bremskreise (1, 2) weisen je mindestens eine Radbremse (VL, VR, HL, HR), eine Fluid-Steuerbaugruppe (38, 42, 44; 40, 46, 48; 24) zum Steuern von Fluiddruck an der mindestens einen Radbremse und mindestens eine Bremsleitung (50, 52; 54, 56) zum Verbinden der Fluid-Steuerbaugruppe mit der mindestens einen Radbremse auf, derart, daß je nur eine Bremsleitung an einer Radbremse angeschlossen ist. Um die Sicherheit der Fahrzeugbremsanlage beim Bremsen mit nur einem intakten Bremskreis zu erhöhen, ist erfindungsgemäß bei der Fahrzeugbremsanlage eine Sensoranordnung (58) zum Ermitteln eines Ausfalles eines Bremskreises vorgesehen, und die Fluid-Steuerbaugruppen sind dazu geeignet, bei Ausfall eines Bremskreises den Fluiddruck an der mindestens einen Radbremse des intakten Bremskreises so zu steuern, daß der Gradient eines sich aufbauenden Giermoments (G) eines mit der Fahrzeugbremsanlage versehenen Fahrzeuges einen vorbestimmten Maximalwert nicht überschreitet.

## Beschreibung

### Hintergrund der Erfindung

Die Erfindung betrifft eine Fahrzeugbremsanlage mit zwei Bremskreisen, die je mindestens eine Radbremse, eine Fluid-Steuerbaugruppe zum Steuern von Fluiddruck an der mindestens einen Radbremse und mindestens eine Bremsleitung zum Verbinden der Fluid-Steuerbaugruppe mit der mindestens einen Radbremse aufweisen, derart, daß je nur eine Bremsleitung an einer Radbremse angeschlossen ist.

Fahrzeugbremsanlagen sind im allgemeinen in zwei Bremskreise geteilt, so daß, bei Ausfall eines Bremskreises, das mit der Bremsanlage versehene Fahrzeug mittels des zweiten intakten Bremskreises noch verzögert werden kann und zumindest eine ausreichende Hilfsbremswirkung sichergestellt ist.

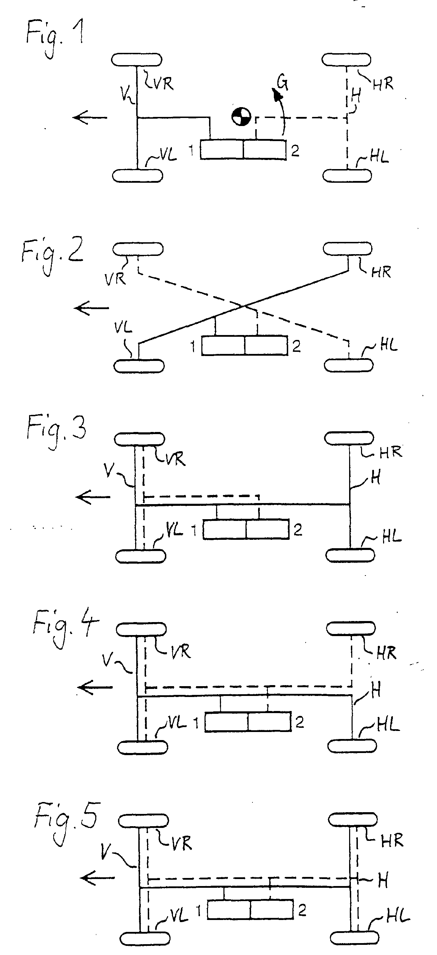

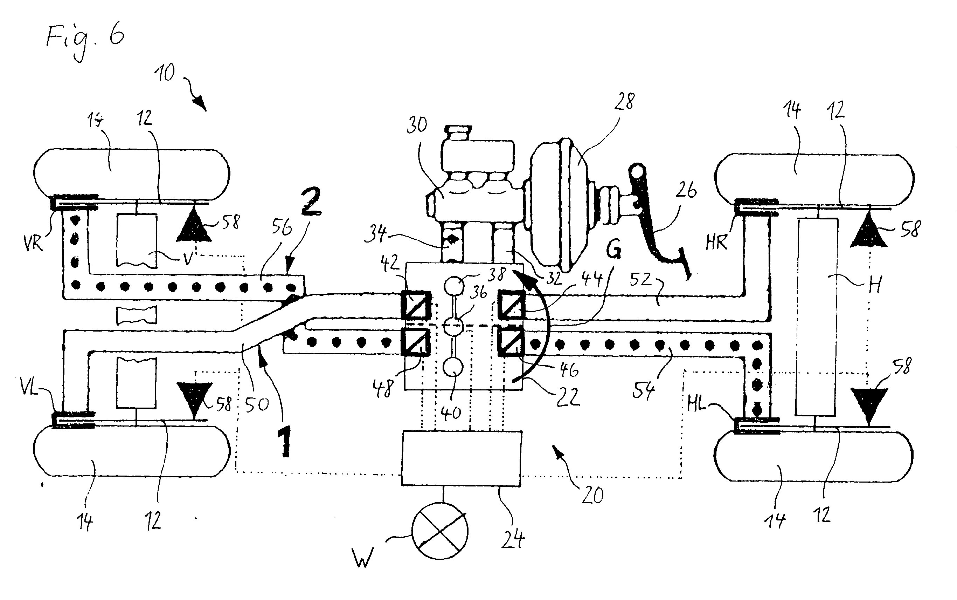

DIN 74000 bestimmt fünf übliche Aufteilungen einer Fahrzeugbremsanlage in zwei Bremskreise:
1) Die II-Aufteilung gemäß Fig.1, bei der jeweils die Radbremsen VL und VR bzw. HL und HR einer Vorderachse V bzw. Hinterachse H einem von zwei Bremskreisen 1 und 2 zugeordnet sind,
2) die X-Aufteilung gemäß Fig.2, bei der zu jedem Bremskreis 1 bzw. 2 die diagonal gegenüberliegenden Radbremsen VL und HR bzw. VR und HL gehören,
3) die HI-Aufteilung gemäß Fig.3, bei der die Radbremsen VL und VR der Vorderachse V beiden Bremskreisen 1 und 2 sowie die Radbremsen HL und HR der Hinterachse H beide einem Bremskreis 1 zugeordnet sind,
4) die LL-Aufteilung gemäß Fig.4, bei der jeder Bremskreis 1 und 2 die Radbremsen VL und VR der Vorderachse V und eine der Radbremsen HL bzw. HR der Hinterachse H ansteuert, und
5) die HH-Aufteilung gemäß Fig.5, bei der jeder Bremskreis 1 und 2 auf alle Radbremsen VL, VR, HL und HR wirkt.

Von diesen Möglichkeiten haben sich gemäß Kraftfahrtechnisches Taschenbuch, Bosch, 22. Auflage, 1995, Seite 622 die II- und die X-Aufteilung durchgesetzt. Bei einem Minimalaufwand an Leitungen, Schläuchen, lösbaren Anschlüssen und statischen bzw. dynamischen Dichtungen sind sie hinsichtlich Ausfallrisiko durch Leckagen mit einem einkreisigen Bremssystem vergleichbar.

Um die gesetzlichen Vorschriften bezüglich der Hilfsbremswirkung bei Personenkraftwagen (PKW) zu erfüllen, werden frontlastige PKW mit der X-Aufteilung ausgerüstet. Die II-Aufteilung eignet sich vorzugsweise für hecklastige PKW sowie mittlere und schwere Nutzkraftwagen (NKW).

Bei leichten NKW kommen hingegen die HI-, LL- und HH-Aufteilung zum Einsatz. Dies ist erforderlich, weil leichte NKW konstruktionsbedingt eine ungünstigere Fahrwerkauslegung, beispielsweise hinsichtlich Achslastverteilung, Achsabstand und Lenkrollradius, aufweisen, so daß ein Bremsen mit nur einem Bremskreis am Fahrzeug ein nicht unerhebliches Drehmoment um dessen Fahrzeughochachse, das in Fig.1 dargestellte, sogenannte Giermoment G, erzeugt. Dieses hohe Giermoment kann zu sicherheitskritischen Fahrzuständen führen. Bei der HI-, LL- und HH-Aufteilung sind mit jedem Bremskreis beide Radbremsen der Vorderachse verbunden, so daß selbst bei Ausfall eines Bremskreises in jedem Fall die Vorderachse gleichmäßig gebremst und ein hohes Giermoment des leichten NKW erst gar nicht entsteht bzw. verhältnismäßig gut kompensiert wird.

Die HI-, LL- und HH-Aufteilung sind jedoch problematisch, da es beim Ausfall beider Radbremsen an einer Achse, beispielsweise aufgrund thermischer Überbeanspruchung, zu einem Totalausfall der Bremsanlage kommen kann. Ferner ist bei der HI-, LL- und HH-Aufteilung der Aufwand hinsichtlich der Anzahl Bremsleitungen und des Anschlusses zweier Bremsleitungen an den Radbremsen höher, als bei der II- und X-Aufteilung. Wegen der höheren Anzahl Bremsleitungen und Verbindungen steigt auch das Leckagerisiko.

Für PKW mit II- und X-Bremskreisaufteilung werden Steuereinheiten eines Antiblockiersystems (ABS), einer Antriebsschlupfregelung (ASR) oder eines elektronischen Stabilitätsprogramms (ESP) entwickelt und in hoher Stückzahl produziert. Ein besonderes Merkmal einer Bremsanlage mit HI-, LL- und HH-Aufteilung ist, daß eine Radbremse von zwei Bremskreisen angesteuert wird. Daher können keine standardmäßigen ABS-, ASR- oder ESP-Steuereinheiten verwendet werden, und es ist erforderlich, gesondert Steuereinheiten zu entwickeln. Eine Bremsanlage mit HI-, LL- und HH-Aufteilung kann aus diesem Grund nur mit hohem Aufwand mit ABS, ASR oder ESP erweitert werden.

### Aufgabe der Erfindung

Der Erfindung liegt die Aufgabe zugrunde, die Sicherheit einer Fahrzeugbremsanlage beim Bremsen mit nur einem intakten Bremskreis zu erhöhen und insbesondere den Einsatz einer Fahrzeugbremsanlage mit II- oder X-Aufteilung auch bei leichten NKW zu ermöglichen.

### Erfindungsgemäße Lösung

Die Aufgabe ist erfindungsgemäß mit einer Fahrzeugbremsanlage der eingangs genannten Art gelöst, bei der eine Sensoranordnung zum Ermitteln eines Ausfalles eines Bremskreises vorgesehen ist, und die Fluid-Steuerbaugruppen dazu geeignet sind, bei Ausfall eines Bremskreises den Fluiddruck an der mindestens einen Radbremse des intakten Bremskreises so zu steuern, daß der Gradient eines sich aufbauenden Giermoments eines mit der Fahrzeugbremsanlage versehenen Fahrzeuges einen vorbestimmten Maximalwert nicht überschreitet.

Ferner ist die Aufgabe durch ein Verfahren gelöst, bei dem eine Sensoranordnung zum Ermitteln eines Ausfalles eines Bremskreises bereitgestellt, ein Ausfall eines Bremskreises ermittelt und der Fluiddruck an der mindestens einen Radbremse des intakten Bremskreises gesteuert wird, so daß der Gradient eines sich aufbauenden Giermoments eines mit der Fahrzeugbremsanlage versehenen Fahrzeuges einen vorbestimmten Maximalwert nicht überschreitet.

Erfindungsgemäß wird der Anstieg des beim Bremsen mit nur einem intakten Bremskreis auftretenden Giermoments des Fahrzeugs durch geeignete Fluiddruckmodulation an der/den Radbremse/n des intakten Bremskreises verlangsamt, bzw. wird verhindert, daß dieser Anstieg des Giermoments einen Wert überschreitet, der zu einem sicherheitskritischen Fahrzustand führen würde. Beispielsweise wird an der Radbremse eines Vorderrades ein im Vergleich zu einer normalen Bremsung flacherer Druckanstieg erzeugt, so daß der maximale Bremsdruck dort etwas später erreicht wird. Das Giermoment ist im wesentlichen proportional zu diesem Bremsdruck und hat daher erfindungsgemäß einen kleineren Gradienten. Das Fahrzeug beginnt also nur langsam zu gieren. Dieses Gierverhalten kann von einem Fahrer einfacher beherrscht werden, als ein plötzliches "Ausbrechen" des Fahrzeugs, aufgrund eines sprunghaft zunehmenden Giermoments.

Die Fluiddruckmodulation unterscheidet sich von der einer ABS-, ASR- oder ESP-Modulation bei einer intakten Fahrzeugbremsanlage dahingehend, daß die Bremsverzögerung an einzelnen Radbremsen, insbesondere der Radbremse am Vorderrad, verringert und/oder, insbesondere der Radbremse am Hinterrad, erhöht wird.

Dabei kann eine für jede Hilfsbremssituation "standardisierte" Verringerung und/oder Erhöhung erfolgen, die konstant ist oder nur von Parametern wie Geschwindigkeit oder Ladezustand des Fahrzeugs abhängt. Alternativ kann das Gierverhalten des Fahrzeuges ermittelt werden, beispielsweise mittels eines Sensors für die Dreh- bzw. Gierrate des Fahrzeugs um die Fahrzeughochachse, und daraus eine "individuell" auf das Gierverhalten der einzelnen Bremssituation angepaßte Verringerung und/oder Erhöhung der Bremsverzögerungen an der/den Radbremse/n bestimmt werden. Die Bremsverzögerungen werden zugleich so gesteuert, daß die gesetzlichen Vorgaben bzgl. der zu erreichenden Restverzögerung im Fehlerfall (ECE13-Regelung) erfüllt werden.

Bei einer vorteilhaften Anwendungsform der Erfindung sind vier Radbremsen jeweils paarweise an einer Vorder- und einer Hinterachse eines mit der Fahrzeugbremsanlage versehenen Fahrzeuges angeordnet, von denen die jeweils diagonal gegenüberliegenden Radbremsen einem Bremskreis zugeordnet sind. Damit ist eine eingangs genannte X-Bremskreisaufteilung geschaffen, bei der die Erfindung besonders vorteilhaft eingesetzt werden kann, da bei dieser X-Aufteilung bei Ausfall eines Bremskreises stets nur ein Vorderrad und das diagonal gegenüberliegende Hinterrad gebremst werden. Das Fahrzeug wird daher stark unsymmetrisch verzögert. Durch die erfindungsgemäße Fluiddruckmodulation kann diese unsymmetrische Verzögerung verhindert, verringert bzw. derart ausgeglichen werden, daß das Fahrzeug beim Bremsen mit nur einem Bremskreis in einem stabilen Fahrzustand bleibt.

Die erfindungsgemäße Fahrzeugbremsanlage kann besonders preisgünstig aus standardisierten Komponenten zusammengestellt werden, indem die beiden Fluid-Steuerbaugruppen in einer konventionellen 4-Kanal ABS-Steuereinheit zusammengefaßt sind, und eine Steuerung der ABS-Steuereinheit dazu eingerichtet ist, Signale von der Sensoranordnung zu empfangen und bei Ausfall eines Bremskreises den Fluiddruck an den Radbremsen des intakten Bremskreises zu steuern. Eine Steuerung ist bei ABS-Steuereinheiten bereits vorhanden, so daß die erfindungsgemäße Fluiddruckmodulation bereits durch Änderung der Software für die Steuerung erhalten werden kann. Alternativ zu einer ABS-Steuereinheit kann die Steuereinheit eines ASR- oder ESP-Systems oder einer elektrohydraulischen Bremse (EHB) eingesetzt werden.

Bei einer besonders einfachen Gestaltung der Erfindung sind die Fluid-Steuerbaugruppen dazu geeignet, bei Ausfall eines Bremskreises den Fluiddruck an der Radbremse der Vorderachse des intakten Bremskreises zu modulieren. Im allgemeinen wirkt an der Radbremse der Vorderachse aufgrund einer Nickbewegung des Fahrzeugs beim Bremsen eine große Bremsverzögerung, die ein hohes Giermoment erzeugen kann. Es kann daher ausreichend sein, den Fluiddruck nur an der Vorderachse zu modulieren und damit das Giermoment zu verringern.

Das Modulieren an der Radbremse der Vorderachse erfolgt im Vergleich zu einer herkömmlichen ABS-Bremsung vorteilhaft, indem der Fluiddruck verringern, insbesondere ein Druckaufbau verlangsamt und/oder eine kurzzeitige Druckabbauphase generiert wird. Damit wird zwar die Bremswirkung der Radbremse verringert, dies ist aber zulässig und sinnvoll, denn das Fahrzeug wird dadurch stabilisiert und eine sicherheitskritische Fahrsituation verhindert.

Vorteilhaft sind die Fluid-Steuerbaugruppen dazu geeignet, bei Ausfall eines Bremskreises an den Radbremsen des intakten Bremskreises den Fluiddruck so zu steuern, daß ein Rad mit höherer Radlast eine geringere Bremsverzögerung erfährt, als ein Rad mit niedrigerer Radlast. Die übertragbare Reibkraft am Rad ist das Produkt von Reibwiderstand und Normalkraft (Radlast). Demnach kann ein Rad mit höherer Radlast eine höhere Reibkraft übertragen und führt dann zu einer höheren Bremsverzögerung. Bei unsymmetrischer Lastverteilung (II-Aufteilung) oder unsymmetrischer Hilfsbremsung (X-Aufteilung) entsteht mit der unsymmetrischen Lastverteilung also eine unsymmetrische Bremsverzögerung und damit ein Giermoment. Erfindungsgemäß wird die unsymmetrische Bremsverzögerung verringert und damit das Entstehen eines sicherheitskritischen Giermoments verhindert.

Als Sensoranordnung werden erfindungsgemäß vorteilhaft Drehzahlsensoren einer konventionellen ABS-Bremsanlage eingesetzt und die Fluid-Steuerbaugruppen sind dazu geeignet, die Schlupfwerte der Räder untereinander und/oder mit gespeicherten Schlupfwerten einer herkömmlichen ABS-Bremsung zu vergleichen und bei hoher Abweichung der Schlupfwerte zu ermitteln, daß ein Rad an einem Bremskreis nicht gebremst wird, daß dieser Bremskreis also ausgefallen ist. Es sind daher keine eigenen Sensoren zum Ermitteln eines Bremskreisausfalles erforderlich. Alternativ oder zusätzlich können besonders zum Ermitteln eines Bremskreisausfalles eingerichtete Sensoren, beispielsweise Drucksensoren an den Bremsleitungen, vorgesehen sein.

Die erfindungsgemäße Fahrzeugbremsanlage wird besonders vorteilhaft bei einem NKW, insbesondere einem leichten NKW, eingesetzt. Bei NKW sind die Radlasten oftmals aufgrund einer unsymmetrischen Beladung stark unterschiedlich, was bei einer Hilfsbremsung zu einem unerwünscht schnellen oder gar sicherheitskritischen Anstieg des Giermoments führen kann. Diese Gefahr ist erfindungsgemäß verringert. Bei leichten NKW konnte eine Fahrzeugbremsanlage mit II- oder X-Aufteilung bisher nicht eingesetzt werden. Dies ist erst mit der erfindungsgemäßen Bremsanlage möglich.

Das erfindungsgemäße Verfahren ist vorteilhaft mit den Schritten weitergebildet: Bereitstellen eines Drehzahlsensors an jeder Radbremse, Ermitteln der Schlupfwerte der Drehzahlsensoren, Vergleichen der Schlupfwerte der Räder untereinander und/oder mit gespeicherten Schlupfwerten einer herkömmlichen ABS-Bremsung und Ermitteln der Abweichung der Schlupfwerte. Dabei werden bei einer Bremsanlage in X-Aufteilung die Schlupfwerte der Räder einer Achse verglichen. Zeigen diese ein unterschiedliches Drehverhalten der Räder an, so werden zusätzlich die Schlupfwerte der diagonal gegenüberliegenden Räder verglichen, um weiter zu bestätigen bzw. verifizieren, daß ein Bremskreis ausgefallen ist und dessen Räder nicht mehr gebremst werden.

Die in den Ansprüchen 7 und 10 beschriebene Art, mittels Drehzahlsensoren den Ausfall eines Bremskreises zu ermitteln kann auch unabhängig von den im kennzeichnenden Teil des Anspruchs 1 genannten Merkmalen angewendet werden.

### Kurzbeschreibung der Zeichnungen

Fig.1 bis 5 zeigen schematische Draufsichten der Bremskreisaufteilungen von Fahrzeugbremsanlagen des Standes der Technik, wie sie eingangs erläutert worden sind.

Fig. 6 zeigt eine schematische Draufsicht eines Ausführungsbeispiels einer erfindungsgemäßen Fahrzeugbremsanlage.

### Beschreibung eines Ausführungsbeispiels

Fig.6 stellt eine Fahrzeugbremsanlage 10 mit vier Radbremsen VL, VR, HL und HR an einer Vorderachse V und einer Hinterachse H dar. Die Radbremsen VL, VR, HL und HR greifen an je eine Bremsscheibe 12, die jeweils drehfest mit je einem Rad 14 verbunden sind. Die Räder 14 sind an der zugehörigen Vorderund Hinterachse V bzw. H in herkömmlicher Weise drehbar gelagert.

Die Fahrzeugbremsanlage 10 weist eine ABS-Steuereinheit 20 mit einem Hydroaggregat 22 und einer damit über gepunktet dargestellte Leitungen zumindest elektrisch gekoppelten Steuerung 24 auf.

In herkömmlicher Weise ist bei der Fahrzeugbremsanlage 10 ferner ein Bremspedal 26, ein damit zu betätigender pneumatischer Bremskraftverstärker 28 und ein mit diesem mechanisch gekoppelter Hauptzylinder 30 vorhanden. Der Hauptzylinder 30 weist zwei nicht weiter veranschaulichte Druckkammern auf, die über eine erste und eine zweite Druckleitung 32 bzw. 34 mit dem Hydroaggregat 22 fluidleitend verbunden sind.

Die Fahrzeugbremsanlage 10 ist in einen ersten sowie einen zweiten Bremskreis 1 bzw. 2 geteilt und die erste sowie zweite Druckleitung 32 bzw. 34 sind jeweils Teil eines dieser Bremskreise 1 bzw. 2.

Im Hydroaggregat 22 sind zwei von einem Motor 36 angetriebene Pumpen 38 und 40 und vier Ventilanordnungen 42, 44, 46 und 48 angeordnet, mittels denen vom Hauptzylinder 30 dem Hydroaggregat 22 zugeführtes Bremsfluid den einzelnen Radbremsen VL, VR, HL und HR zugeteilt wird. Ferner dient das Hydroaggregat dazu, Bremsfluid von den Radbremsen VL, VR, HL und HR weg und zurück zum Hauptzylinder 30 zu fördern. Das von der Steuerung 24 betätigte Hydroaggregat 22 gewährleistet so in herkömmlicher Weise eine ABS-Funktion, mittels der ein Blockieren der Räder 14 beim Bremsen verhindert wird.

Die Pumpe 38 sowie die Ventilanordnungen 42 und 44 sind dem Bremskreis 1 und die Pumpe 40 sowie die Ventilanordnungen 46 und 48 dem Bremskreis 2 zugeordnet. Bremsleitungen 50, 52, 54 und 56 sind am Hydroaggregat 22 angeschlossen und führen jeweils einzeln zu den Radbremsen VL, HR, HL und VR. Die Fahrzeugbremsanlage 10 weist damit eine X-Aufteilung gemäß DIN 74000 auf.

An den Rädern 14 ist je ein Drehzahlsensor 58 angeordnet. Jeder Drehzahlsensor 58 ist mittels ebenfalls gepunktet dargestellten Leitungen mit der Steuerung 24 verbunden.

Fällt bei der dargestellten Fahrzeugbremsanlage 10 einer der Bremskreise, beispielsweise der Bremskreis 1, aus, so kann dies mittels der Drehzahlsensoren 58 und der Steuerung 24 ermittelt werden, indem von den Drehzahlsensoren 58 ermittelte Schlupfwerte eines Rades mit denen eines anderen Rades und/oder mit gespeicherten Schlupfwerten einer üblichen ABS-Bremsung verglichen werden. Ein derartig erkanntes Ausfallen der Fahrzeugbremsanlage 10 kann mittels einer Warneinrichtung, zum Beispiel einer mit der Steuerung 24 elektrisch verbundenen Warnlampe W dem Fahrer signalisiert werden. Weichen die Schlupfwerte eines und/oder beider Räder von Radbremsen eines Bremskreises stark von denen des anderen Bremskreises ab oder laufen diese Werte mit der Zeit auseinander, so ist dies ein Hinweis dafür, daß die Räder dieses Bremskreises nicht mehr gebremst werden, daß der Bremskreis also ausgefallen ist. Im Beispiel würde dies bedeuten, daß die Schlupfwerte der Räder 14 der Radbremsen VL und HR (Bremskreis 1) von denen der Räder 14 der Radbremsen VR und HL (Bremskreis 2) abweichen.

Wird auf diese Weise der Ausfall des Bremskreises 1 erkannt, so steuert die Steuerung 24 mittels der Pumpe 40 und/oder den Ventilanordnungen 46 und 48 den Fluiddruck an den Radbremsen VR und HL (Bremskreis 2) so, daß der Gradient eines sich aufbauenden Giermoments G des mit der Fahrzeugbremsanlage 10 versehenen Fahrzeugs einen vorbestimmten, sicherheitskritischen Maximalwert nicht überschreitet. Dabei kann alternativ oder gleichzeitig der Absolutwert des Giermoments begrenzt werden.

Dabei wird insbesondere der Druckaufbau des Fluiddruckes an der Radbremse VR verlangsamt und/oder dort eine oder mehrere kurze Druckabbauphasen generiert, damit die von der Radbremse VR erzeugte Bremsverzögerung nicht wesentlich größer als die von der Radbremse HL erzeugte Bremsverzögerung ist. Die Fahrzeugbremsanlage 10 wird also so gesteuert, daß die von den einzelnen Radbremsen VR und HL des noch intakten Bremskreises 2 über die zugehörigen Räder 14 erzeugten Bremsverzögerungen relativ zueinander nur eine geringe Streubreite aufweisen.

Diese Streubreite kann ermittelt und überwacht werden, indem die Steuerung 24 die Schlupfwerte des Drehzahlsensors 58 an der Radbremse VR mit denen des Drehzahlsensors 58 an der diagonal gegenüberliegenden zweiten Radbremse HL des intakten Bremskreises 2 vergleicht.

## Patentansprüche

1. Fahrzeugbremsanlage (10) mit
zwei Bremskreisen (1, 2), die je
- mindestens eine Radbremse (VL, HR; VR, HL),
- eine Fluid-Steuerbaugruppe (38, 42, 44; 40, 46, 48; 24) zum Steuern von Fluiddruck an der mindestens einen Radbremse (VL, HR; VR, HL) und
- mindestens eine Bremsleitung (50, 52; 54, 56) zum Verbinden der Fluid-Steuerbaugruppe (38, 42, 44; 40, 46, 48; 24) mit der mindestens einen Radbremse (VL, HR; HL, VR) aufweisen, derart, daß je nur eine Bremsleitung (50; 52; 54; 56) an einer Radbremse (VL; HR; HL; VR) angeschlossen ist,
**dadurch gekennzeichnet, daß**
- eine Sensoranordnung (58) zum Ermitteln eines Ausfalles eines Bremskreises (1; 2) vorgesehen ist, und
- die Fluid-Steuerbaugruppen (38, 42, 44; 40, 46, 48; 24) dazu geeignet sind, bei Ausfall eines Bremskreises (1; 2) den Fluiddruck an der mindestens einen Radbremse (VR, HL; VL, HR) des intakten Bremskreises (2; 1) so zu steuern, daß der Gradient eines sich aufbauenden Giermoments (G) eines mit der Fahrzeugbremsanlage (10) versehenen Fahrzeuges einen vorbestimmten Maximalwert nicht überschreitet.

2. Fahrzeugbremsanlage nach Anspruch 1,
**dadurch gekennzeichnet, daß** vier Radbremsen (VL, VR, HL, HR) jeweils paarweise an einer Vorder- (V) und einer Hinterachse (H) eines mit der Fahrzeugbremsanlage (10) versehenen Fahrzeuges angeordnet sind, von denen die jeweils diagonal gegenüberliegenden Radbremsen (VL, HR; VR, HL) einem Bremskreis (1; 2) zugeordnet sind (X-Bremskreisaufteilung).

3. Fahrzeugbremsanlage nach Anspruch 2,
**dadurch gekennzeichnet, daß** die beiden Fluid-Steuerbaugruppen (38, 42, 44; 40, 46, 48; 24) in einer konventionellen 4-Kanal ABS-Steuereinheit (22, 24) zusammengefaßt sind, und eine Steuerung (24) der ABS-Steuereinheit (22, 24) dazu eingerichtet ist, Signale von der Sensoranordnung (58) zu empfangen und bei Ausfall eines Bremskreises (1; 2) den Fluiddruck an den Radbremsen (VR, HL; VL, HR) des intakten Bremskreises (2; 1) zu steuern.

4. Fahrzeugbremsanlage nach Anspruch 2 oder 3,
**dadurch gekennzeichnet, daß** die Fluid-Steuerbaugruppen (38, 42, 44; 40, 46, 48; 24) dazu geeignet sind, bei Ausfall eines Bremskreises (1; 2) den Fluiddruck an der Radbremse (VR; VL) der Vorderachse (V) des intakten Bremskreises (2; 1) zu modulieren.

5. Fahrzeugbremsanlage nach Anspruch 4,
**dadurch gekennzeichnet, daß** die Fluid-Steuerbaugruppen (38, 42, 44; 40, 46, 48; 24) dazu geeignet sind, bei Ausfall eines Bremskreises (1; 2) den Fluiddruck an der Radbremse (VR; VL) der Vorderachse (V) des intakten Bremskreises (2; 1) im Vergleich zu einer herkömmlichen ABS-Bremsung zu verringern, insbesondere einen Druckaufbau zu verlangsamen und/oder eine kurzzeitige Druckabbauphase zu generieren.

6. Fahrzeugbremsanlage nach Anspruch 2, 3, 4 oder 5,
**dadurch gekennzeichnet, daß** die Fluid-Steuerbaugruppen (38, 42, 44; 40, 46, 48; 24) dazu geeignet sind, bei Ausfall eines Bremskreises (1; 2) den Fluiddruck an den Radbremsen (VR, HL; VL, HR) des intakten Bremskreises (2; 1) so zu steuern, daß ein Rad (14) mit höherer Radlast eine geringere Bremsverzögerung erfährt, als ein Rad (14) mit niedrigerer Radlast.

7. Fahrzeugbremsanlage nach einem der Ansprüche 1 bis 6,
**dadurch gekennzeichnet, daß** als Sensoranordnung Drehzahlsensoren (58) einer konventionellen ABS-Bremsanlage vorgesehen sind und die Fluid-Steuerbaugruppen (38, 42, 44; 40, 46, 48; 24) dazu geeignet sind, die Schlupfwerte der Drehzahlsensoren (58) von Rädern (14) untereinander und/oder mit gespeicherten Schlupfwerten einer herkömmlichen ABS-Bremsung zu vergleichen und bei vorbestimmter Abweichung der Schlupfwerte zu ermitteln, daß ein Rad (14) an einem Bremskreis nicht gebremst wird und dieser Bremskreis (1; 2) ausgefallen ist.

8. Fahrzeugbremsanlage nach einem der Ansprüche 1 bis 7,
**dadurch gekennzeichnet, daß** die Fahrzeugbremsanlage (10) zum Einbau in einem Nutzfahrzeug, insbesondere einem leichten Nutzfahrzeug, geeignet ist.

9. Verfahren zum Steuern einer Fahrzeugbremsanlage (10) mit dem Schritt:
- Bereitstellen einer Fahrzeugbremsanlage (10) mit zwei Bremskreisen (1; 2), die je mindestens eine Radbremse (VL, HR; VR, HL), eine Fluid-Steuerbaugruppe (38, 42, 44; 40, 46, 48; 24) zum Steuern von Fluiddruck an der mindestens einen Radbremse (VL, HR; VR, HL), und mindestens eine Bremsleitung (50, 52; 54, 56) zum Verbinden der Fluid-Steuerbaugruppe (38, 42, 44; 40, 46, 48; 24) mit der mindestens einen Radbremse (VL, HR; HL, VR) aufweisen, derart, daß je nur eine Bremsleitung (50; 52; 54; 56) an einer Radbremse (VL; HR; HL; VR) angeschlossen ist,
**gekennzeichnet durch** die Schritte:
- Bereitstellen einer Sensoranordnung (58) zum Ermitteln eines Ausfalles eines Bremskreises (1; 2),
- Ermitteln eines Ausfalles eines Bremskreises (1; 2), und
- Steuern des Fluiddrucks an der mindestens einen Radbremse (VR, HL; VL, HR) des intakten Bremskreises (2; 1), so daß der Gradient eines sich aufbauenden Giermoments (G) eines mit der Fahrzeugbremsanlage (10) versehenen Fahrzeuges einen vorbestimmten Maximalwert nicht überschreitet.

10. Verfahren nach Anspruch 9,
**dadurch gekennzeichnet, daß** der Schritt des Ermittelns eines Ausfalles eines Bremskreises (1; 2) die Schritte umfaßt:
- Bereitstellen eines Drehzahlsensors (58) an jeder Radbremse (VL, VR, HL, HR),
- Ermitteln der Schlupfwerte der Drehzahlsensoren (58),
- Vergleichen der Schlupfwerte von Rädern (14) untereinander und/oder mit gespeicherten Schlupfwerten einer herkömmlichen ABS-Bremsung, und
- Ermitteln der Abweichung der Schlupfwerte.
